# EUROPEAN PATENT APPLICATION

(11) **EP 2 036 462 A1**
(43) Date of publication of application: **18.03.2009**
(21) Application number: 08703072.2
(22) Date of filing: 10.01.2008
(51) Int. Cl.: A47F 5/00, G09G 5/00

(54) **ELECTRONIC SHELF TAG AND ELECTRONIC SHELF TAG SYSTEM**

(30) Priority: 15.01.2007 JP 2007006092
(71) Applicant: Ishida Co., Ltd., Shogoin Sakyo-ku Kyoto-shi Kyoto 606-8392 (JP)
(72) Inventor: MIZUKAWA, Shigemitsu, Ritto-shi Shiga 520-3026 (JP); KAGATSUME, Hidetaka, Ritto-shi Shiga 520-3026 (JP)
(74) Representative: Skone James, Robert Edmund
(86) International application number: PCT/JP2008/050208
(87) International publication number: WO 2008/087889

(57) **Abstract**

It is an object of the present invention to provide techniques which allow for lower power consumption of electronic shelf labels. In order to attain the object, electronic shelf labels according to the present invention are located to respectively correspond to products, and each of the electronic shelf labels displays product data of its corresponding product. Each of the electronic shelf labels repeatedly performs "sleep operations" in which predetermined functions are stopped for a predetermined time period, at given time intervals, and the predetermined time period is extended when non-receipt of data continues for a specified time period.

## Description

### Field of the Invention

The present invention relates to an electronic shelf label which is located in such a manner as to correspond to a certain product and displays product data regarding the corresponding certain product, and to an electronic shelf label system including electronic shelf labels each of which is configured as noted above.

### Background Art

In general, in stores such as supermarkets and convenience stores, selling prices of products in a store are under centralized control with the use of a product master stored in a point-of-sale (POS) system or the like. On the other hand, indication of selling prices to customers (consumers) is achieved by shelf labels formed of paper which are placed in respective positions of products in most cases. In such cases where shelf labels formed of paper are employed, human errors such as errors in selling prices are likely to occur because shelf labels can not be managed without the help of manpower. For this reason, an incorrect selling price different from a selling price which is supposed to be provided at the time of checkout using an electronic cash register of a POS system may possibly be indicated to customers.

In order to overcome the foregoing disadvantages, in recent years, an electronic shelf label system (ESL system) has been put into practical use as disclosed in Patent documents 1 and 2. In an electronic shelf label system, portable electronic shelf labels for displaying product data such as data indicating selling prices are located in such a manner as to respectively correspond to products. Then, a communication signal which includes data indicating a selling price based on a product master is transmitted to each of the electronic shelf labels from a distribution device for distributing information, and the selling price is displayed on each of the electronic shelf labels. As a result, correct selling prices identical to selling prices which are supposed to be provided at the time of checkout are displayed on the electronic shelf labels, and correct selling prices can be indicated to customers.

Additionally, Patent document 3 discloses a technique regarding lower power consumption of a communications device.

Patent Document 1: Japanese Patent Application Laid-Open No. 11-219148
Patent Document 2: Japanese Patent No. 3600237
Patent Document 3: Japanese Patent Application Laid-Open No. 2001-358647

In an electronic shelf label system as described above, there is a demand for lower power consumption of electronic shelf labels, in general.

### Description of the Invention

The present invention has been made in view of the foregoing problems, and it is an object of the present invention to provide techniques which allow for lower power consumption of electronic shelf labels.

In order to solve the above-described problems, the first aspect of an electronic shelf label according to the present invention is located to correspond to a product and displays product data regarding the product corresponding thereto, wherein "sleep" operations in which predetermined functions are stopped for a predetermined time period are repeatedly performed at given time intervals, and the predetermined time period is extended when non-receipt of data continues for a specified time period.

The second aspect of the electronic shelf label according to present invention is the first aspect wherein the predetermined time period is extended stepwise in accordance with a time length of non-receipt of data.

The third aspect of the electronic shelf label according to the present invention is located to correspond to a product and displays product data regarding the product corresponding thereto, wherein "sleep" operations in which predetermined functions are stopped for a predetermined time period are repeatedly performed at given time intervals, and the predetermined time period is extended when non-receipt of specific data continues for a specified time period.

The fourth aspect of the electronic shelf label according to the present invention is the third aspect wherein the predetermined time period is extended stepwise in accordance with a time length of non-receipt of the specific data.

An electronic shelf label system according to the present invention includes any of the first through fourth aspects of the electronic shelf label and an information distribution part for distributing the product data which is to be displayed on the electronic shelf label, to the electronic shelf label.

According to the first aspect of the electronic shelf label of the present invention, a time period for "sleep" operations is extended when non-receipt of data continues for a specified time period, to thereby allow for lower power consumption.

According to the second aspect of the electronic shelf label of the present invention, a time period for "sleep" operations is extended stepwise in accordance with a time period of non-receipt of data, to thereby allow for further lower power consumption.

According to the third aspect of the electronic shelf label of the present invention, a time period for "sleep" operations is extended when non-receipt of specific data continues for a specified time period, to thereby allow for lower power consumption while preventing extension of a time period for "sleep" operations from being hindered due to receipt of unnecessary data.

According to the fourth aspect of the electronic shelf label of the present invention, a time period for "sleep" operations is extended stepwise in accordance with a time period of non-receipt of specific data, to thereby allow for further lower power consumption.

According to the electronic shelf label system of the present invention, it is possible to form an electronic shelf label system with electronic shelf labels of lower power consumption.

These and other objects, features, aspects and advantages of the present invention will become more apparent from the following detailed description of the present invention when taken in conjunction with the accompanying drawings.

These and other objects, features, aspects and advantages of the present invention will become more apparent from the following detailed description of the present invention when taken in conjunction with the accompanying drawings.

### Brief Descriptions of Drawings

[Fig. 1] Fig. 1 is a view for showing a state in which electronic shelf labels included in an electronic shelf label system according to the preferred embodiment of the present invention are located.
[Fig. 2]Fig. 2 is a view for showing an example of a structure of a store information system which includes the electronic shelf label system according to the preferred embodiment of the present invention.
[Fig. 3]Fig. 3 is a view for showing a structure of an ESL server according to the preferred embodiment of the present invention.
[Fig. 4]Fig. 4 is a view for showing an example of a product file.
[Fig. 5]Fig. 5 is a view for showing a structure of a communications device according to the preferred embodiment of the present invention.
[Fig. 6]Fig. 6 is a view for showing a structure of an electronic shelf label according to the preferred embodiment of the present invention..
[Fig. 7]Fig. 7 is a view for showing a structure of a control part of the electronic shelf label according to the preferred embodiment of the present invention.
[Fig. 8]Fig. 8 is a flow chart for showing operations of the ESL server according to the preferred embodiment of the present invention.
[Fig. 9]Fig. 9 is a view for showing transmission data which is output to the electronic shelf label from a distribution device according to the preferred embodiment of the present invention.
[Fig. 10]Fig. 10 is a view for showing operations of the electronic shelf label according to the preferred embodiment of the present invention.
[Fig. 11]Fig. 11 is a view for showing operations of the electronic shelf label according to the preferred embodiment of the present invention.

### Best Mode for Carrying Out the Invention

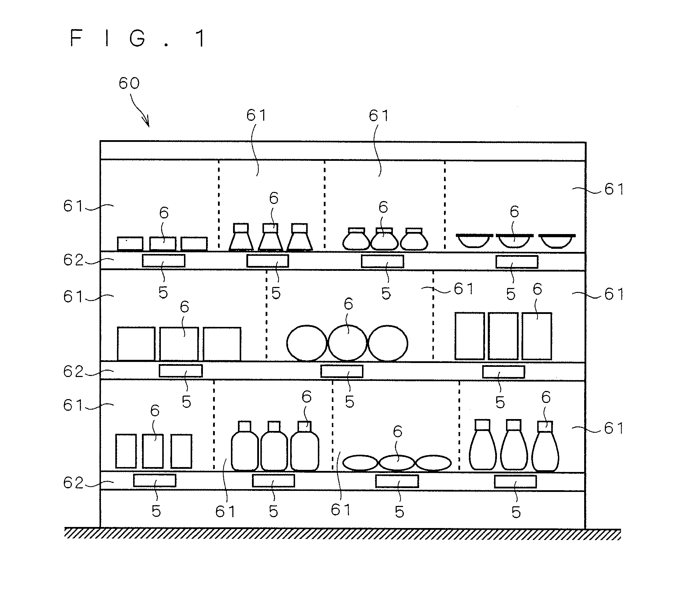

Fig. 1 is a view for showing a state in which electronic shelf labels 5 included in an electronic shelf label system 1 according to the preferred embodiment of the present invention are located in a shelf 60 of a store. In the electronic shelf label system 1, portable electronic shelf labels 5 which display product data regarding products such as data indicating selling prices are located so as to respectively correspond to products 6. Then, a communications signal which includes data indicating a selling price based on a product master is transmitted from a distribution device which distributes information to each of the electronic shelf labels 5, on which the selling price is displayed. As a result, a correct selling price which matches a selling price which is supposed to be provided at the time of checkout is displayed on each of the electronic shelf labels 5, so that a correct selling price is indicated to customers.

As shown in Fig. 1, the shelf 60 is partitioned into spaces each of which is called a face 61, where the same kinds of products 6 are gathered and placed. Onto a frame 62 of the shelf 60, the electronic shelf labels 5 are attached in positions respectively corresponding to the faces 61. That is, each of the electronic shelf labels 5 corresponds to a single product (exactly, a single kind of products) 6, and is located onto the frame 62 near the corresponding product 6 (in most cases, below the corresponding product 6). Each of the electronic shelf labels 5 includes a display part, and the display part displays a selling price of the corresponding product 6. Customers (consumers) of a store become aware of selling prices of the products 6 through such display of the electronic shelf labels 5 as described above.

Each of the electronic shelf labels 5 is a portable device, and can be detached from the frame 62 to be relocated in a different position, to keep up with a location change of the product 6. According to the present preferred embodiment, a plurality of shelves configured like the shelf 60 shown in Fig. 1 are placed on a selling floor of a store.

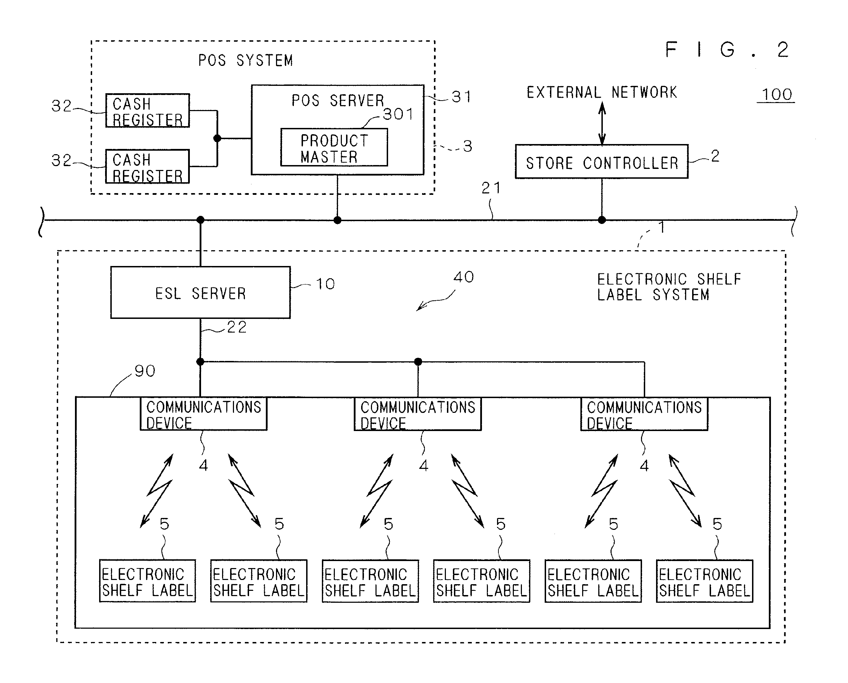

Fig. 2 is a view for showing an example of a structure of a store information system 100 including the electronic shelf label system 1, which is applied to a store. As shown in Fig. 2, the store information system 100 includes a store controller 2 and a POS system 3, in addition to the electronic shelf label system 1. A POS server 31 included in the POS system 3 and an ESL server 10 included in the electronic shelf label system 1 are connected to the store controller 2 via a LAN 21. This allows data transmission among the store controller 2, the POS system 3, and the electronic shelf label system 1.

The store controller 2 is formed of a typical computer, and functions as a device which totally controls the store information system 100. Also, the store controller 2 is connected to an external network such as Internet, and is allowed to communicate with computers such as servers, which are installed in a head office that manages a store, via an external network.

The POS system 3 is a system which collects and analyzes information regarding sale of products at the time of selling the products. The POS system 3 includes a plurality of cash registers 32 for performing checkout procedures of products, in addition to the POS server 31 which totally controls the POS system 3. The POS server 31 and the cash registers 32 are connected with each other via a dedicated communications cable.

The POS server 31 is formed of a typical computer, and contains a hard disk in which a product master 301 indicating a variety of information regarding products such as selling prices is stored. In each of the plurality of cash registers 32, checkout procedures of products are performed based on selling prices listed in the product master 301.

Information regarding all products in a store are under centralized control with the use of the product master 301. Information listed in the product master 301 includes "product codes" which are identification information of products, "product names" which are names of products, "regular prices" which are selling prices in normal times, "bargain prices" which are selling prices provided at the time of bargain sale, a "bargain period" which is a period for bargain sale, and the like.

The electronic shelf label system 1 is roughly divided into the plurality of electronic shelf labels 5 which have been described above and a distribution device 40 for distributing "selling prices" of products which should be displayed on the electronic shelf labels 5.

The distribution device 40, i.e., an information distribution part, includes the ESL server 10 which is a server for totally controlling the electronic shelf label system 1, and a plurality of communications devices 4. The ESL server 10 and the communications devices 4 are connected with each other via a dedicated communications cable 22, so that data can be communicated between the ESL server 10 and the communications devices 4. Each of the communications devices 4 performs infrared communication with the electronic shelf labels 5. The communications devices 4 are placed on a ceiling or the like of a selling floor 90 at substantially regular intervals so that the communications devices 4 can communicate with all the electronic shelf labels 5 located on the selling floor.

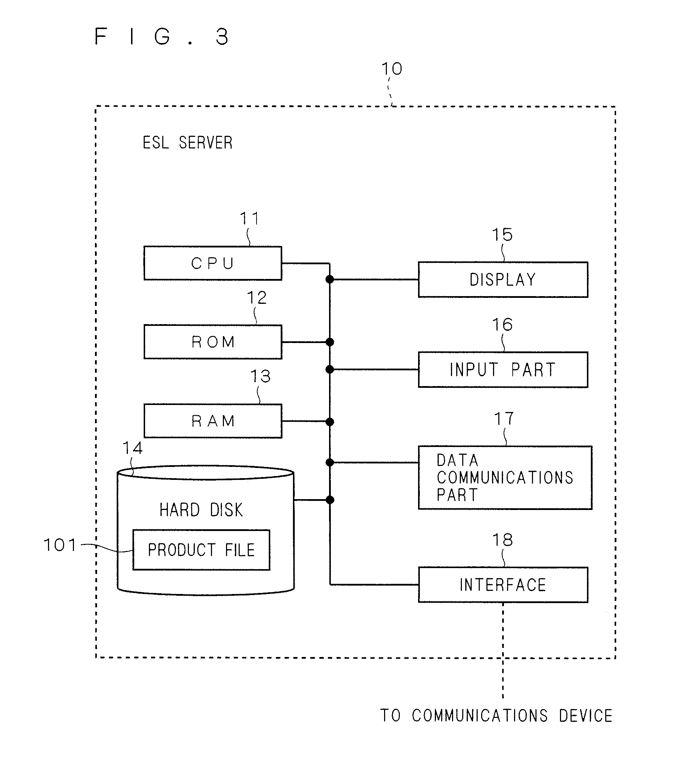

A structure of the ESL server 10 as a hardware is similar to that of a typical computer. Fig. 3 is a view for showing a structure of the ESL server 10. The ESL server 10 includes a CPU 11 which performs various computations, a ROM 12 which stores a basic program, a RAM 13 serving as a workspace of computations, a hard disk 14 which stores programs, various data files, and the like, a display device 15 which displays a variety of information, an input part 16 which includes a keyboard, a mouse, and the like, a data communications part 17 which has a function of communicating data via the LAN 21, and an interface 18 used for communication with the communications devices 4. Transmission data including data indicating selling prices which should be transmitted to the electronic shelf labels 5 is coded in accordance with a predetermined scheme, and then is provided to the communications devices 4 via the interface 18.

A dedicated program is previously stored in the hard disk 14 of the ESL server 10, and the CPU 11 performs computations in accordance with the dedicated program, so that various functions of the ESL server 10 are implemented. Also, the hard disk 14 of the ESL server 10 stores a product file 101 which is a data file indicating a variety of information regarding products.

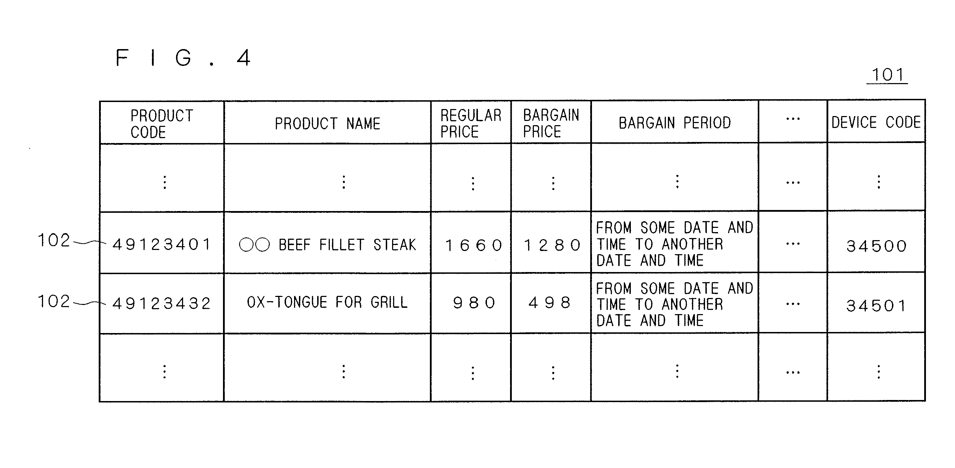

Fig. 4 is a view for showing an example of the product file 101. As shown in Fig. 4, the product file 101 is in tabular form, in which each of records 102 indicates information regarding a single product. More specifically, a "product code", a "product name", a "regular price", a "bargain price", a "bargain period", and the like are stored for each of the records 102. Such information is identical to that in the above-described product master 301 stored in the POS system 3, and is stored based on information in the product master 301 through communication between the ESL server 10 and the POS system 3. Accordingly, details of information in the product file 101 and details of information in the product master 301 match each other.

Each of the records 102 of the product file 101 further stores a "device code" which is a hardware ID unique to each of the electronic shelf labels 5 included in the electronic shelf label system 1. As a result, products and the electronic shelf labels 5 are in one-to-one correspondences (are linked with each other) in the form of data. With the use of the device code, a selling price of a given product is transmitted to one of the electronic shelf labels 5 which corresponds to the given product.

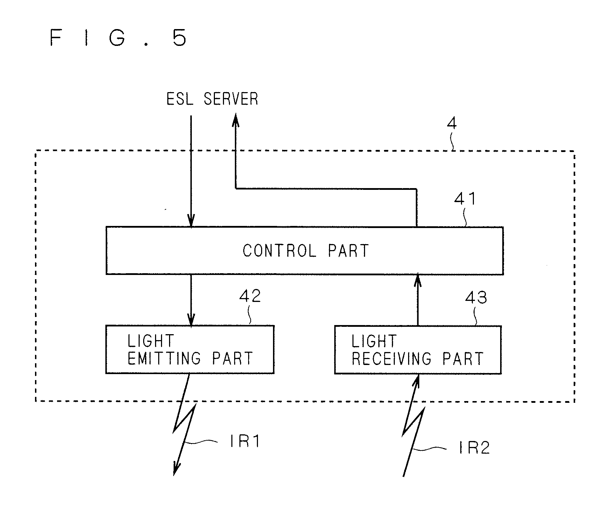

Next, the communications devices 4 will be described in detail. Fig. 5 is a view for showing a structure of each of the communications devices 4. As shown in Fig. 5, each of the communications devices 4 includes a control part 41, a light emitting part 42 formed of an LED, for example, and a light receiving part 43 formed of a photodiode and an amplifier, for example. The control part 41 controls the light emitting part 42 based on transmission data provided from the ESL server 10. Under control of the control part 41, the light emitting part 42 outputs an infrared signal IR1 which is modulated by the transmission data provided from the ESL server 10. The light receiving part 43 receives an infrared signal IR2 output from any of the electronic shelf labels 5. The infrared signal IR2 is modulated by the transmission data which is provided to the ESL server 10 from the electronic shelf label 5. The light receiving part 43 converts the received infrared signal IR2 into an electrical signal and outputs the electrical signal to the control part 41. The control part 41 carries out detection or the other processes on the electrical signal which is received from the light receiving part 43, to regenerate the transmission data which is generated in the electronic shelf label 5. Then, the control part 41 outputs the regenerated transmission data to the ESL server 10. Further, also the transmission data provided from the electronic shelf label 5 is coded, and ESL server 10 decodes the transmission data which is received from any of the communications devices 4.

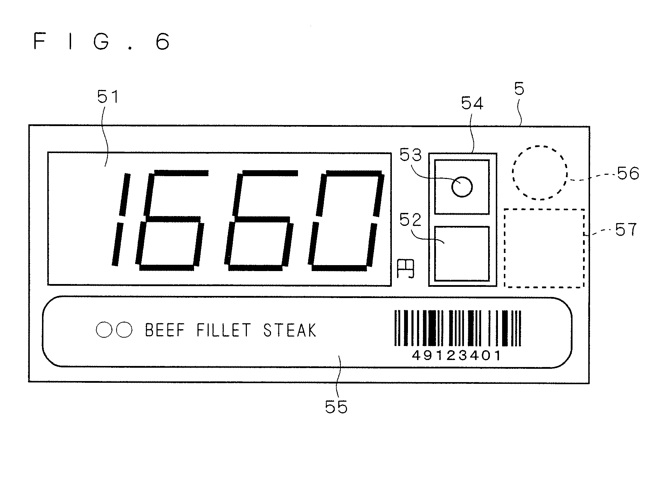

Next, the electronic shelf label 5 will be described. Fig. 6 is a view for showing a structure of the electronic shelf label 5. As shown in Fig. 6, in a front surface of the electronic shelf label 5, a display part 51 for displaying a selling price of a product and a communications part 54 responsible for communication with the distribution device 40 are provided. The display part 51 is a display device of a dot matrix type, and is formed of electronic paper, for example. Since electronic paper is a non-volatile display device, the display part 51 then can maintain descriptions displayed thereon even if power supply thereto is stopped.

The communications part 54 includes a light emitting part 52 for outputting the infrared signal IR2 and a light receiving part 53 for receiving the infrared signal IR1 from any of the communications devices 4, converting the received infrared signal IR1 into an electrical signal, and outputting the electrical signal.

Onto a lower portion of the display part 51, an overlay label 55 on which a "product name" and a bar code indicating a "product code" of a product corresponding to the electronic shelf label 5 is printed is put. If a label or the like is not put on the electronic shelf label 5, it is difficult to see which of products corresponds to the electronic shelf label 5. However, as a result of provision of the overlay label 55, the electronic shelf label 5 and a product visually correspond to each other.

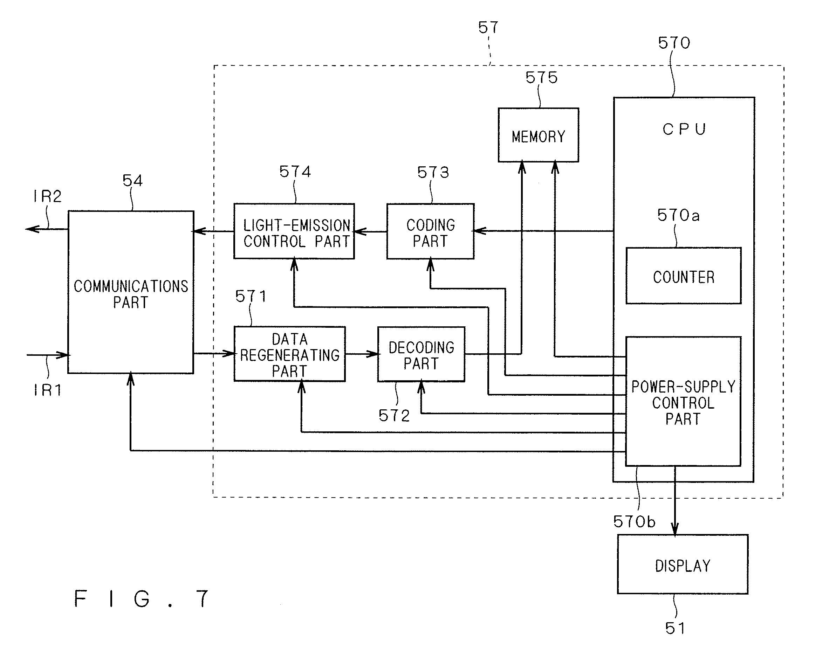

Also, each of the electronic shelf labels 5 includes a compact battery 56 for supplying power to each of components included in the electronic shelf label 5. Further, each of the electronic shelf labels 5 includes a control part 57 for controlling operations of the electronic shelf label 5. Fig. 7 is a block diagram for showing a structure of the control part 57. As shown in Fig. 7, the control part 57 includes a CPU 570, a data regenerating part 571, a decoding part 572, a coding part 573, a light-emission control part 574, and a memory 575. The data regenerating part 571 carries out detection or the other processes on an electrical signal output from the light receiving part 53, and regenerates coded transmission data which is generated in the ESL server 10. The decoding part 572 decodes the transmission data which is regenerated in the data regenerating part 571, and writes the decoded transmission data into the memory 575. The CPU 570 reads out the decoded transmission data from the memory 575, and acquires data indicating a selling price, which data is included in the read transmission data, to control the display part 51 based on the acquired data. In this manner, a selling price is displayed on the display part 51.

Also, upon receipt of transmission data from the distribution device 40, the CPU 570 generates data indicating the receipt (which will hereinafter be referred to as "ACK data") as transmission data directed to the ESL server 10, and outputs the ACK data to the coding part 573. The coding part 573 codes the received transmission data in accordance with a predetermined scheme, and outputs the coded transmission data to the light-emission control part 574. The light-emission control part 574 controls the light emitting part 52 based on the received transmission data. As a result, the light emitting part 52 outputs the infrared signal IR2 which is modulated by the transmission data directed to the ESL server 10.

The memory 575 is a non-volatile memory, for example, and data indicating a device code of its own device and an operation program executed by the CPU 570 are previously stored in the memory 575.

The CPU 570 includes a counter 570a for counting a current time and a power-supply control part 570b which is capable of controlling power supply from the battery 56 to the data regenerating part 571, the decoding part 572, the coding part 573, the light-emission control part 574, the memory 575, and the display part 51, individually. Each of the electronic shelf labels 5 according to the present preferred embodiment can stop predetermined functions and perform "sleep" operations in order to reduce power consumption thereof. For "sleep" operations according to the present preferred embodiment, power supply to the data regenerating part 571, the decoding part 572, the coding part 573, the light-emission control part 574, the memory 575, and the display part 51 is stopped, and only the counter 570a operates in the CPU 570.

In the CPU 570, the power-supply control part 570b stops power supply to the data regenerating part 571, the decoding part 572, the coding part 573, the light-emission control part 574, the memory 575, and the display part 51, and a threshold value is set in the counter 570a in accordance with a time period for "sleep" operations, so that all the functions other than the functions of the counter 570a are stopped. Then, "sleep" operations start in the electronic shelf label 5. Thereafter, when a value counted by the counter 570a reaches the threshold value, the counter 570a outputs a notification signal, so that the CPU 570 restarts to perform the other functions and the power-supply control part 570b resumes power supply to the data regenerating part 571, the decoding part 572, the coding part 573, the light-emission control part 574, the memory 575, and the display part 51. Then, "sleep" operations are terminated. In each of the electronic shelf labels 5, a time period for "sleep operations" can be arbitrarily set by changing a threshold value which is set in the counter 570a. Hereinafter, a mode in which the electronic shelf label 5 performs "sleep" operations will be referred to as a "sleep mode", and a mode in which the electronic shelf label 5 performs the other operations will be referred to as a "wakeup mode" in the present specification.

As will be described, in each of the electronic shelf labels 5 according to the present preferred embodiment, "sleep" operations in which predetermined functions are stopped for a predetermined time period are repeatedly performed at given time intervals. In other words, each of the electronic shelf labels 5 performs intermittent operations. Then, when no data is received for a specified time period, each of the electronic shelf labels 5 extends a time period for "sleep" operations, namely, a time period during which the predetermined functions are stopped. As a result, it is possible to configure the electronic shelf label system 1 with the electronic shelf labels 5 of low power consumption.

Next, a series of operations of the electronic shelf label system 1 for achieving display of a selling price on the electronic shelf label 5 will be described. In the electronic shelf label system 1 according to the present preferred embodiment, a selling price is distributed from the distribution device 40 to each of the electronic shelf labels 5 at the time of start-up of the system, at the time of updating a selling price which is to be displayed on the electronic shelf label 5, and at the other like times. It is noted that updating of a selling price is needed when a regular price listed in the product master 301 is changed or when a selling price is changed from a regular price to a bargain price for bargain sale. At the time of start-up of the system, selling prices of all the products 6 in a store are distributed. On the other hand, at the time of updating a selling price, only selling prices of the products 6, which should be updated, are distributed. As a result, selling prices displayed on the electronic shelf labels 5 always match selling prices which are supposed to be provided at the time of checkout in the cash registers 32. The following description will deal with operations of the distribution device 40 when consecutively distributing selling prices of a plurality of products 6 at the time of start-up of the system, at the time of updating selling prices of the products 6, or at the other like times. In the following description, a product 6, of which the selling price should be distributed, will be referred to as "a target product 6".

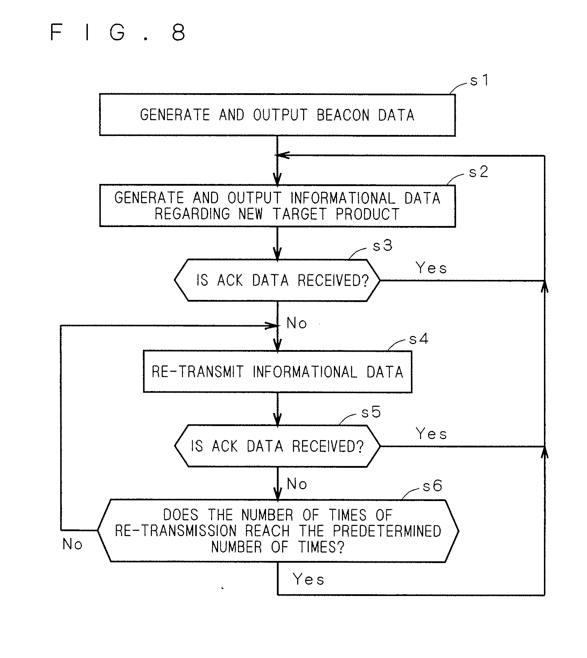

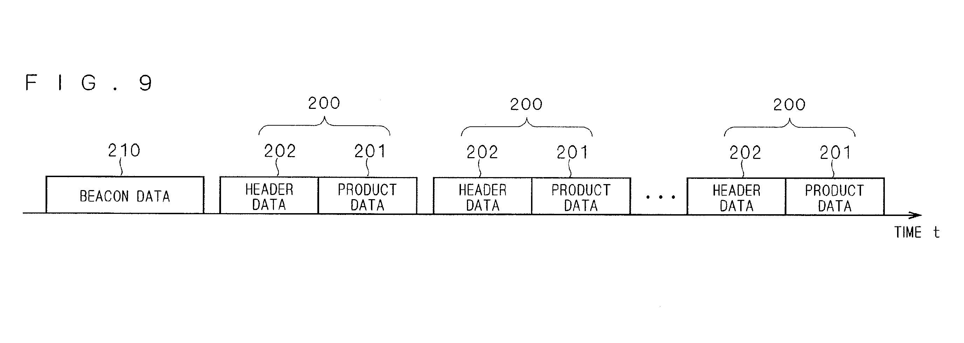

Fig. 8 is a flow chart for showing operations of the ESL server 10. Fig. 9 is a view for showing transmission data which is provided from the ESL server 10 to each of the communications devices 4. Referring to Fig. 8, the ESL server 10 generates beacon data 210 which tells that information will be soon distributed to the electronic shelf labels 5, and outputs the generated beacon data 210 to each of the communications devices 4 in a step s1. Subsequently, the ESL server 10 generates informational data 200 regarding the target product 6 and outputs the generated informational data 200 to each of the communications devices 4 in a step s2.

It is noted that the informational data 200 includes product data 201 and header data 202 as shown in Fig. 9. The product data 201 includes information about a product such as a regular price and a bargain price which are stored in the product file 101. A piece of the header data 202 includes data indicating the device code which has been described above is given to the electronic shelf label 5 which should receive the product data 201 included in the same piece of the informational data 200 that also includes the piece of the header data 202.

In the step s2, the ESL server 10 refers to the record 102 regarding the target product 6 in the product file 101, first, to acquire the selling price which is either regular price or bargain price whichever should be distributed, and the device code. The device code acquired in the step s2 is the device code of the electronic shelf label 5 which corresponds to the target product 6, and the selling price acquired in the step s2 is the selling price which should be displayed on the electronic shelf label 5 corresponding to the target product 6. Subsequently, the ESL server 10 incorporates data indicating the acquired selling price into the product data 201 and incorporates data indicating the acquired device code into the header data 202, to generate the informational data 200. Then, the ESL server 10 outputs the informational data 200 to each of the communications devices 4 via the communications cable 22.

Thereafter, in a step s3, when the ELS server 10 receives ACK data from the electronic shelf label 5 which corresponds to the target product 6 through the communications device 4, the ESL server 10 performs the step s2 again, to generate the informational data 200 regarding a new target product 6, which is then output to each of the communications devices 4.

On the other hand, if the ELS server 10 does not receive ACK data from the electronic shelf label 5 which corresponds to the target product 6 for a specified time period in the step s3, the ESL server 10 re-transmits the informational data 200 regarding the target product 6 in a step s4. Then, in a step s5, when the ELS server 10 receives ACK data from the electronic shelf label 5 which corresponds to the target product 6, the ESL server 10 performs the step s2, to generate the informational data 200 regarding a new target product 6, which is then output. If the ESL server 10 does not receive ACK data for a specified time period in the step s5, the ESL server 10 checks whether or not the number of times the step s4 is performed reaches the predetermined number of times in a step s6. Then, if the number of times the step s4 is performed reaches the predetermined number of times, the ESL server 10 performs the step s2. On the other hand, if the number of times the step s4 is performed does not reach the predetermined number of times, the ESL serve 10 performs the step s4 again and re-transmits the informational data 200.

Thereafter, the ESL server 10 performs the steps s2, s3, s4, s5, and s6 until the informational data 200 regarding all the target products 6, of which selling prices should be distributed is output.

In each of the communications devices 4, upon receipt of the beacon data 210 from the ESL server 10, the control part 41 controls the light emitting part 42 based on the received beacon data 210. As a result, the infrared signal IR1 which is modulated by the beacon data 210 is output from each of the communications devices 4. Then, in each of the communications devices 4, upon receipt of the informational data 200 subsequent to the beacon data 210, the control part 41 controls the light emitting part 42 based on the received informational data 200. As a result, the infrared signal IR1 which is modulated by the informational data 200 is output from each of the communications devices 4, subsequent to the infrared signal IR1 which is modulated by the beacon data 210.

In the above-described manner, the beacon data 210 and the informational data 200 regarding each of the target products 6 are sequentially output from the distribution device 40 as shown in Fig. 9.

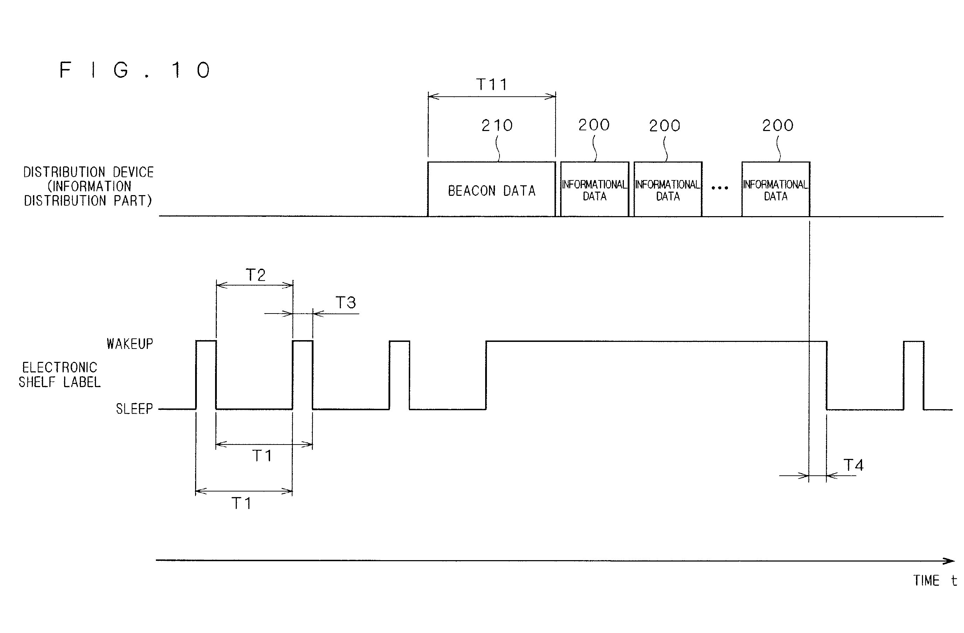

Fig. 10 is a view for showing operations of each of the electronic shelf labels 5. As shown in Fig. 10, "sleep" operations are repeated at certain time intervals until data is received in each of the electronic shelf labels 5. In other words, each of the electronic shelf labels 5 performs intermittent operations until data is received. As shown in Fig. 10, each of the electronic shelf labels 5 performs the "sleep" operation for a time period of T2(<T1) once every time period of T1. In other words, each of the electronic shelf labels 5 is placed in a wakeup mode for a time period of T3 (=T1-T2) once every time period of T1. Thus, if data is received while the electronic shelf label 5 is being placed in a wakeup mode, intermittent operations are terminated and the electronic shelf label 5 is kept in a wakeup mode, to continuously receive data which is to be transmitted thereafter.

It is noted that the time period of T1 which is a cycle in which the electronic shelf label 5 becomes to be in a wakeup mode (which will hereinafter be referred to as a "wakeup cycle") is set to be shorter than the time length T11 of the beacon data 210, in other words, a time period between the start and the end of transmission of the beacon data 210 in the distribution device 40. The time period of T1 is set to be a half of the time length T11, for example. Accordingly, the electronic shelf label 5 is placed in a wakeup mode without fail while the beacon data 210 is being transmitted from the distribution device 40. Meanwhile, when any information is distributed from the distribution device 40, the beacon data 210 is first transmitted, and intermittent operations are terminated upon receipt of the beacon data 210 in each of the electronic shelf labels 5 as shown in Fig. 10. Additionally, in the electronic shelf label 5, the CPU 570 periodically reads out data in the memory 575, to thereby acknowledge receipt of data.

In each of the electronic shelf labels 5 in which intermittent operations have been terminated, when the informational data 200 is received and written into the memory 575, subsequent to the beacon data 210, the CPU 570 reads out the header data 202 from the memory 575. Then, the CPU 570 acquires a device code from the header data 202, and compares the acquired device code with a code of its own device which has been previously stored in the memory 575, to check whether or not the two device codes match each other.

If the two device codes math each other, the CPU 570 determines that the product data 201 included in the received informational data 200 is data directed to its own device, then acquires a selling price from the product data 201, and drives the display part 51 to display the acquired selling price. Subsequently, the CPU 570 forms ACK data and outputs the ACK data to the coding part 573. Thereafter, the light emitting part 52 outputs the infrared signal IR2 which is modulated by the ACK data, and the ACK data is input to the distribution device 40. As a result, the ESL server 10 in the distribution device 40 can confirm whether or not data indicating a selling price is successfully received by the electronic shelf label 5. As such, if ACK data is not output from the electronic shelf label 5, it is determined that data indicating a selling price is not successfully received by the electronic shelf label 5, to allow the ESL server 10 to repeatedly output data indicating a selling price until ACK data is received, as described above. Consequently, descriptions displayed on the electronic shelf label 5 can be surely updated, to thereby considerably improve the reliability of the system.

On the other hand, if the two device codes do not math each other, the CPU 570 determines that the product data 201 in the received informational data 200 is not directed to its own device, and waits for new informational data 200.

Thereafter, the electronic shelf labels 5 perform the same processes as described above on all the pieces of the informational data 200 which are received. After the electronic shelf labels 5 receive the informational data 200 regarding all the target products 6, of which selling prices should be distributed, if no data is received for a specified time period of T4, intermittent operations are resumed. Then, upon receipt of new beacon data 210, the electronic shelf labels 5 operates in the same manner as described above.

The distribution device 40 transmits not only a selling price but also the other information of the product 6 to the corresponding electronic shelf label 5. For example, sale information such as the volume of sales and the quantity of stock of the product 6 is incorporated in the product data 201 of the informational data 200, and is transmitted to the corresponding electronic shelf label 5. The electronic shelf label 5, upon receipt of data indicating sale information, stores the data in the memory 575. Descriptions displayed on the display part 51 of the electronic shelf label 5, which displays a selling price of the corresponding product 6 under normal conditions, can be changed from the selling price to the sale information with the use of a handy display changer operated by a sales clerk. By operations of a sales clerk, an infrared signal is output from the display changer to the electronic shelf label 5. The electronic shelf label 5, upon receipt of an infrared signal from the display changer, reads out data indicating sale information of the corresponding product 6 from the memory 575, and displays the sale information which has been read out, on the display part 51. In the above-described manner, a sales clerk can directly change descriptions displayed on the electronic shelf labels with the use of the handy display changer.

As is made clear from the above description, in a situation where the electronic shelf labels 5 are located on the selling floor 90, information about products such as selling prices are distributed from the distribution device 40 to the electronic shelf labels 5 at least several times a day, typically. As such, each of the electronic shelf labels 5 must be furnished with the capability of surely receiving the beacon data 210, and thus, a time period for "sleep" operations which contribute to lower power consumption cannot be set to be very long.

In contrast thereto, in a situation where the electronic shelf labels 5 are stored in a manufacturing plant before shipment or in a backyard of a store, the electronic shelf labels 5 do not need to receive any data, so that a time period for "sleep" operations can be set to be longer, which allow for lower power consumption of the electronic shelf labels 5.

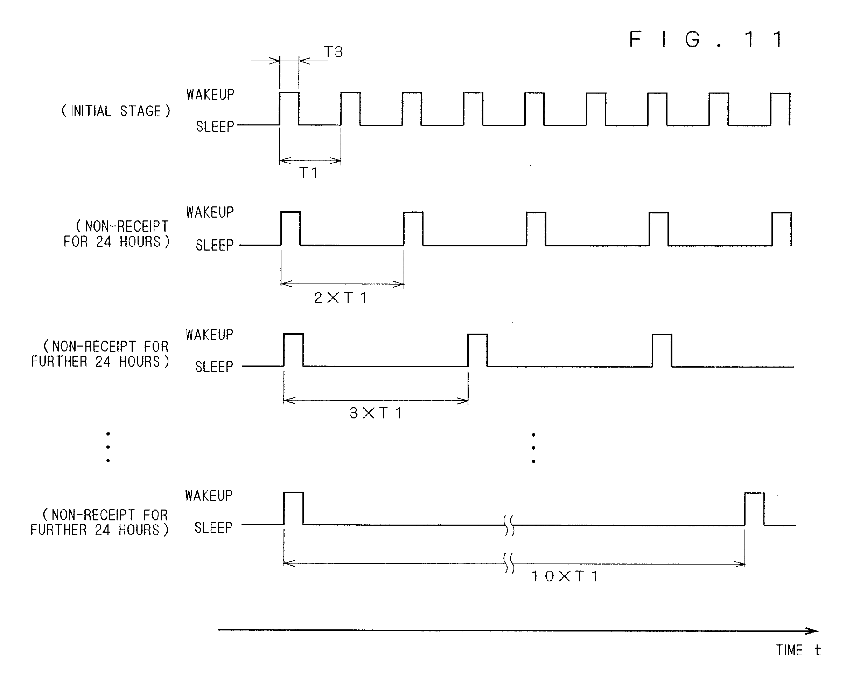

Based thereon, according to the present preferred embodiment, in a situation where the electronic shelf labels 5 do not receive any data for a specified time period, a time period for "sleep" operations (which will hereinafter be referred to as a "sleep time"), in other words, a time period during which predetermined functions are stopped, is extended, to thereby reduce power consumption of the electronic shelf labels 5. Also, a sleep time is further extended stepwise in accordance with a time period of non-receipt of data, to thereby allow for further lower power consumption. Fig. 11 is a view for showing how the above matters are implemented.

Referring to Fig. 11, in intermittent operations of the electronic shelf label 5 in an initial stage, the electronic shelf label 5 is placed in a wakeup mode only for a time period of T3 once every time period of T1 as described above. In the electronic shelf label 5, if no data is received for a specified time period, 24 hours, for example, a wakeup cycle of T1 is extended to be (2XT1) while the duration (T3) of a wakeup mode is left un-changed. As a result, a sleep time is extended. In the electronic shelf label 5, if no data is received for another 24 hours, a wakeup cycle of (2 X T1) is extended to be (3 X T1). As a result, a sleep time is further extended. Thereafter, each time non-receipt of data continues for a specified time period, the electronic shelf label 5 extends a sleep time. Then, when a wakeup cycle becomes equal to (10X T1), a sleep time is not extended even if non-receipt of data continues for another specified time period. That is, in the electronic shelf labels 5, the maximum wakeup cycle is (10 X T1).

As is described above, in the electronic shelf labels 5 according to the present preferred embodiment, when no data is received for a specified time period, a sleep time is extended, which can reduce power consumption. Thus, in a situation where the electronic shelf labels 5 which are battery-powered are stored in a manufacturing plant or a backyard of a store for a long period, wasteful power consumption of the electronic shelf labels 5 before actual use thereof can be suppressed.

Also, in the electronic shelf labels 5 according to the present preferred embodiment, a sleep time is further extended stepwise in accordance with a time period of non-receipt of data, which can further reduce power consumption of the electronic shelf labels 5.

Meanwhile, when a sleep time is extended in the electronic shelf label 5, a wakeup period becomes longer than the time length T11 of the beacon data 210. As such, if the electronic shelf label 5 is attached to the shelf 60 on the selling floor 90 without any process being performed on the electronic shelf label 5, the electronic shelf label 5 cannot receive the beacon data 210. Accordingly, the electronic shelf label 5 may possibly fail to receive first some pieces of the informational data 200 out of all the pieces of the informational data 200 which are to be transmitted subsequent to the beacon data 210. If the product data 201 directed to its own device is included in the pieces of the informational data 200 which are not received by the electronic shelf label 5, the electronic shelf label 5 can not display a selling price distributed from the distribution device 40. As such, for the electronic shelf label 5 which has been left un-used for a long period, there is a need to return the pattern of intermittent operations thereof to an initial pattern, to make a wakeup period shorter than the time length T11 of the beacon data 210. Below, processes for returning the pattern of intermittent operations of the electronic shelf label 5 to an initial pattern will be described in detail.

For instance, in a situation where the electronic shelf label 5 is stored in a manufacturing plant for a long period before shipment, the beacon data 210, for example, is transmitted from a test instrument to the electronic shelf label 5 for many hours in a pre-shipment test. Since the maximum wakeup period is (10XT1) in the electronic shelf label 5 as described above, data is transmitted to the electronic shelf label 5 at least for a time period of (10 X T1). This terminates intermittent operations of the electronic shelf label 5. Subsequently, when no data is received for a specified time period of T4 after data transmission from the test instrument is completed, the electronic shelf label 5 is customized to perform "sleep" operations for a time period of T2 once every time period of T1, in other words, the pattern of intermittent operations of the electronic shelf label 5 is initialized.

On the other hand, in a situation where the electronic shelf label 5 is stored in a backyard of a store for a long period, data transmission from a test instrument to the electronic shelf label 5 for a long period may be carried out in an installation test which is carried out immediately before locating the electronic shelf label 5 on the selling floor 90. In this case, intermittent operations of the electronic shelf label 5 are terminated upon receipt of data, and when a specified time period of T4 elapses from the end of the data transmission from the test instrument, the electronic shelf label 5 is customized to perform intermittent operations in an initial pattern in the same manner as described above.

Moreover, even in a situation where the electronic shelf label 5 is attached to the shelf 60 on the selling floor 90, the pattern of intermittent operations of the electronic shelf label 5 can be initialized by transmitting an infrared signal including predetermined data to the electronic shelf label 5 from the display changer which has been described above.

Alternatively, in a case where the distribution device 40 transmits respective pieces of the informational data 200 regarding all of the products 6 on the selling floor 90, by controlling the distribution device 40 to lastly distribute pieces of the informational data 200 directed to some of the electronic shelf labels 5 which are newly located on the selling floor 90, it is possible to initialize the pattern of intermittent operations of each of the new electronic shelf labels 5. As described above, the maximum wakeup period of the electronic shelf label 5 is equal to (10 X T 1), which is set to be much shorter than a time period required for the distribution device 40 to transmit respective pieces of the informational data 200 regarding all the products 6 on the selling floor 90 to the electronic shelf labels 5. Thus, to lastly distribute pieces of the informational data 200 which are directed to the new electronic shelf labels 5 in the distribution device 40 would allow the new electronic shelf labels 5 to receive pieces of the informational data 200 directed to the other electronic shelf labels 5 before the pieces of the informational data 200 including the product data 201 directed to the new electronic shelf labels 5 are output from the distribution device 40. In the new electronic shelf labels 5, as a result of receipt of the informational data 200 directed to the other electronic shelf labels 5, intermittent operations are terminated. Then, the new electronic shelf labels 5 receive the pieces of the informational data 200 including the product data 201 directed thereto, and thereafter, when non-receipt of data continues for a specified time period of T4, the new electronic shelf labels 5 perform intermittent operations in an initial pattern.

As is made clear from the above description, since the distribution device 40 distributes information to the electronic shelf labels 5 several times a day under normal conditions, a sleep time during intermittent operations is not extended in the electronic shelf labels 5 when actually used. However, there can be a case where no data is transmitted from the distribution device 40 for more than 24 hours such as a case where a store is shut down. In such case, a time period during which no data is transmitted in the distribution device 40 is measured. Then, if no data is transmitted for more than 24 hours at the time of starting distribution of information, the beacon data 210 is transmitted for a time period longer than normal, i.e., a time period longer than T11. As a result, the pattern of intermittent operations of each of the electronic shelf labels 5 can be returned to an initial pattern.

Further alternatively, though a sleep time is extended when non-receipt of data continues for a specified time period in the above-described example of the operations of the electronic shelf labels 5 according to the present preferred embodiment, a sleep time may be extended when non-receipt of specific data, not arbitrary data, continues for a specified time period. For example, a sleep time may be extended only when non-receipt of the beacon data 210 continues for a specified time period. By configuring the electronic shelf labels 5 in the foregoing manner, it is possible to prevent the extension of a sleep time in each of the electronic shelf labels 5 from being hindered due to unintended reception of unnecessary data.

Further alternatively, a sleep time may be extended stepwise in accordance with the time length of non-receipt of specific data in the same manner as in the example of the operations shown in Fig. 11. For example, when the beacon data 210 is not received for 24 hours, a wakeup period is extended to be twice, and when the beacon data 210 is not received for 48 hours, a wakeup period is extended to be thrice.

In the foregoing alternative case where a sleep time is extended when the beacon data 210 is not received for a specified time period in the electronic shelf labels 5, upon receipt of the beacon data 210, intermittent operations are terminated in the electronic shelf labels 5 in the same manner as in the example of operations shown in Fig. 10. Thereafter, when non-receipt of data continues for a specified time period of T4, intermittent operations in an initial pattern are performed.

Further alternatively, a product name and a product code which are printed on the overlay label 55 may be displayed on the display part 51 of each of the electronic shelf labels 5. In this alternative case, the overlay label 55 is unnecessary, and data indicating a product name and a product code are incorporated in the product data 201 of the informational data 200.

While the invention has been shown and described in detail, the foregoing description is in all aspects illustrative and not restrictive. It is therefore understood that numerous modifications and variations can be devised without departing from the scope of the invention.

## Claims

1. An electronic shelf label which is located to correspond to a product and displays product data regarding said product corresponding thereto, wherein
"sleep" operations in which predetermined functions are stopped for a predetermined time period are repeatedly performed at given time intervals, and
said predetermined time period is extended when non-receipt of data continues for a specified time period.

2. The electronic shelf label according to claim 1, wherein
said predetermined time period is extended stepwise in accordance with a time length of non-receipt of data.

3. An electronic shelf label which is located to correspond to a product and displays product data regarding said product corresponding thereto, wherein
"sleep" operations in which predetermined functions are stopped for a predetermined time period are repeatedly performed at given time intervals, and
said predetermined time period is extended when non-receipt of specific data continues for a specified time period.

4. The electronic shelf label according to claim 3, wherein
said predetermined time period is extended stepwise in accordance with a time length of non-receipt of said specific data.

5. An electronic shelf label system comprising:
said electronic shelf label according to any of claims 1, 2, 3, and 4; and
an information distribution part for distributing said product data which is to be displayed on said electronic shelf label, to said electronic shelf label.
